# EUROPÄISCHE PATENTSCHRIFT

(11) **EP 1 690 777 B1**
(45) Veröffentlichungstag und Bekanntmachung des Hinweises auf die Patenterteilung: **19.03.2008**
(21) Anmeldenummer: 06100750.6
(22) Anmeldetag: 24.01.2006
(51) Int. Cl.: B62D 15/02

(54) **Verfahren und System zur Unterstützung eines semiautonomen Parkvorgangs von Kraftfahrzeugen**
Method and system for supporting a semi-autonomous parking procedure of motor vehicles
Méthode et système de support d'une procédure semi-autonome des véhicules automotrices

(30) Priorität: 10.02.2005 DE 102005005969
(43) Veröffentlichungstag der Anmeldung: 16.08.2006
(73) Patentinhaber: ROBERT BOSCH GMBH, 70442 Stuttgart (DE)
(72) Erfinder: Becker, Markus, 70435, Stuttgart (DE)

(56) Entgegenhaltungen:
- DE-A1- 10 337 842
- FR-A- 2 785 383
- US-A- 5 742 141
- US-A1- 2004 020 699

## Beschreibung

### Stand der Technik

Die vorliegende Erfindung betrifft ein Verfahren zur Unterstützung eines semiautonomen Rangier- oder Parkvorgangs bei einem Kraftfahrzeug, wobei die Größe einer Parklücke und die Position des Kraftfahrzeugs relativ zu der Parklücke erfasst werden und in Abhängigkeit von diesen erfassten Daten ein geeigneter Parkvorgangsweg ermittelt und automatisch die Lenkung des Kraftfahrzeugs entsprechend des ermittelten Parkvorgangswegs betätigt wird. Solch eines Verfahren ist, gemäß dem Oberbegriff des Anspruchs 1, aus US 2004/0020699 A1 bekannt.

Derartige Verfahren und Systeme sind bei Kraftfahrzeugen zur Unterstützung des Fahrers beim Einparken oder Ausparken oder allgemein beim Rangieren des Fahrzeugs bekannt. Die zunehmende Verkehrsdichte und verstärkte Bebauung freier Flächen engen den Verkehrsraum insbesondere in Ballungszentren kontinuierlich ein. Der zur Verfiigung stehende Parkraum wird enger und die Suche nach einer geeigneten Parklücke belastet den Fahrer zusätzlich zum immer mehr zunehmenden Verkehr. Hier kann die Funktion Parklückenvermessung (PLV) den Fahrer bei der Suche nach einer ausreichen großen Parklücke unterstützen. Anschließend hilft ein semiautonomer Einparkassistent (SPA = Semiautonomous Parking Assistant) zügig in die Parklücke einzufahren. Somit werden lange und/oder erfolglose Einparkvorgänge vermeidbar.

Bei den semiautonomen Einparkassistenten (SPA) wird unterschieden zwischen einer SPA-Info-Funktion und einer SPA-Lenk-Funktion. Für beide Funktionen wird nach dem Finden einer ausreichend großen Parklücke in Abhängigkeit von der Größe und der relativen Lage der Parklücke zum Kraftfahrzeug durch einen Rechner zunächst ein geeigneter, möglichst optimaler Parkvorgangsweg ermittelt, auf dem das Kraftfahrzeug in die Parklücke hinein gesteuert werden kann.

Die SPA-Info-Funktion enthält geeignete Kommunikationsmittel, die als Benutzerschnittstelle (HMI = Human Machine Interface) den Fahrer optisch und/oder akustisch und/oder haptisch anweisen, wie er vorgehen muss, um in die Parklücke hineinzufahren. Diese Anweisungen beinhalten sowohl Lenkkommandos als auch Fahrkommandos. So wird dem Fahrer beispielsweise mitgeteilt, dass er vor oder zurück fahren oder anhalten soll, bzw. dass er nach links oder rechts lenken soll. Ein derartiges System ist beispielsweise aus den Druckschriften DE 297 18 862 U1 oder DE 196 46 559 A1 bekannt.

Die SPA-Lenk-Funktion enthält eine automatische Lenkung, die das Kraftfahrzeug automatisch in die Parklücke hineinlenkt. Der Fahrer muss in diesem Fall nur noch die entsprechenden Gänge oder Fahrstufen wählen und das Kraftfahrzeug in Fahrt versetzen bzw. anhalten. Dabei kann er wiederum von geeigneten Kommunikationsmitteln (HMI) unterstützt werden. Es sind auch SPA-Systeme bekannt, bei denen zusätzlich auch die Fahr- und/oder Bremsfunktionen des Kraftfahrzeugs automatisch ausgeführt werden. Ein derartiges System ist beispielsweise aus der Druckschrift DE 38 44 340 A1 bekannt.

SPA-Lenk-Systeme, die komplizierte Parkvorgänge durchführen und ein Kraftfahrzeug in mehreren Zügen auch in kleinere Parklücken hineinsteuern, sind mit einem hohen konstruktiven Aufwands verbunden. Der Aufwand und die Kosten können bei solchen SPA-Lenk-Systemen geringer ausfallen, die Einparkvorgänge in nur einem Zug, also in der Regel mit nur einer Rückwärtsfahrt durchführen. Hierbei wird jedoch eine relativ große Parklücke benötigt, was aufgrund der eingangs genannten Entwicklungen mit zunehmend größeren Problemen verbunden ist. Daher werden an sich ausreichend große Parklücken oftmals als nicht groß genug für einen einzügigen Einparkvorgang angegeben. Außerdem muss der Fahrer am Schluss des semiautonomen Parkvorgangs mitunter noch nachkorrigieren, falls beispielsweise das Kraftfahrzeug schräg in der Parklücke steht. Die der vorliegenden Erfindung zugrundeliegende Problematik besteht allgemein darin, die SPA-Lenk-Funktion weiter zu verbessern bzw. zu erweitern und ein verbessertes Verfahren der eingangs genannten Art zu schaffen, das den Fahrer bei geringem Aufwand und geringen Kosten wirkungsvoll bei Parkvorgängen des Kraftfahrzeugs auch in kleinere Parklücken unterstützt.

### Vorteile der Erfindung

Das erfindungsgemäße Verfahren gemäß Anspruch 1 weist gegenüber den bekannten Ausführungsformen den Vorteil auf, dass nur der geringere konstruktive Aufwand für die SPA-Lenk-Funktion in einem Zug erforderlich ist, und dass trotzdem ein semiautonomer Parkvorgang und somit eine effektive Unterstützung des Fahrers eines Kraftfahrzeugs auch bei relativ kleinen Parklücken möglich ist.

Dabei führt die Anwendung des erfindungsgemäßen Verfahrens dazu, dass der Fahrer den Eindruck eines stabilen Einparksystems erhält, da er zwar selber einen Zug des Parkvorgangs ausführen muss, er aber dabei nicht das Gefühl hat, dass es sich dabei um die Korrektur eines fehlgeschlagenen oder unzureichend ausgeführten Parkvorgangs des Einparkassistenten handelt.

Die der vorliegenden Erfmdung zugrundeliegende Idee besteht darin, dass die Lenkung des Kraftfahrzeugs nur über einen Teilbereich des Parkvorgangswegs bis zu einer Zwischenposition des Kraftfahrzeugs automatisch betätigt wird, und dass bei oder nach dem Erreichen der Zwischenposition dem Fahrer Anweisungen zum weiteren Verlauf des Parkvorgangswegs gegeben werden, so dass der Fahrer die dazu notwendigen Lenkbewegungen selber ausführt.

Auf diese Weise wird ein defmierter Übergang zwischen dem automatisch gelenkten Teil (SPA-Lenk-Funktion) und dem informellen Teil (SPA-Info-Funktion) des Parkvorgangs erzeugt. Der Fahrer erhält nach dem ersten, automatisch gelenkten Teil des Parkvorgangs konkrete Anweisungen, wie er den Parkvorgang insbesondere in einem einzigen abschließenden Parkzug selber zu Ende führen kann. In besonders einfach auszuführenden Formen des Verfahrens ist vorgesehen, dass der Fahrer den abschließenden Parkzug ohne weitere Hilfe vornimmt. So erhält er beispielsweise nur die Anweisung "bitte Lenkrad voll nach rechts einschlagen und vorfahren". Dadurch wird in vorteilhafter Weise beim Fahrer der Eindruck einer nur gelegentlich erforderlichen Korrekturmaßnahme vermieden, denn er ist sich stets bewusst, dass die Beendigung des Parkvorgangs in jedem Fall durch ihn selber erfolgt. Somit bekommt der Fahrer dennoch das Gefiihl, dass sein Einparksystem ihn durch eine Kombination von SPA-LenkFunktionen und SPA-Info-Funktionen vollständig in die Parklücke befördert.

Auf diese Weise wird eine vorteilhafte Erweiterung der SPA-Lenk-Funktion erreicht, die dazu führt, dass mit vergleichsweise wenig Aufwand und verhältnismäßig geringen Kosten der Fahrer eine effektive Unterstützung bei Parkvorgängen des Kraftfahrzeugs erhält und er somit auch relativ leicht kleinere Parklücken nutzen kann.

Vorteilhafte Weiterbildungen und Verbesserungen des erfindungsgemäßen Verfahrens ergeben sich aus den abhängigen Ansprüchen.

So ist es besonders vorteilhaft, wenn der Parkvorgang ein Rückwärts-Einparkvorgang in eine hinter dem Kraftfahrzeug parallel zur Seite versetzt liegende Parklücke ist, wobei die Zwischenposition am Ende des in Rückwärtsfahrt ausgeführten ersten Zuges des Einparkvorgangs liegt. Bei diesem Einparkvorgang kann das erfmdungsgemäße Verfahren den Fahrer besonders gut unterstützen. Dennoch kann es grundsätzlich auch bei anderen Parkvorgängen, beispielsweise beim Einparken in schräg oder senkrecht zur aktuellen Fahrzeugposition angeordnete Parklücken sowie beim Ausparken aus Parklücken angewendet werden. Stets wird dabei jedoch nur ein Teil des Parkvorganges bzw. des dabei zurückgelegten Parkvorgangwegs bis zu einer bestimmten Zwischenposition von der SPA-Lenk-Funktion unterstützt. Dabei handelt es sich insbesondere um den ersten Zug des Parkvorgangs. Von der so mit automatischer Lenkung erreichten Zwischenposition aus wird der Fahrer danach bis zum Ende des Einpark- oder Ausparkvorgangs nur noch von der SPA-Info-Funktion unterstützt.

Dabei ist es weiterhin besonders günstig, wenn die Zwischenposition derart versetzt und in einem Winkel schräg zur ermittelten Endposition des Parkvorgangs liegt, dass das Kraftfahrzeug mit einem bestimmten Einschlagwinkel der Lenkung in die Endposition oder in eine geradlinig vor oder hinter der Endposition liegende Position lenkbar ist. Vorzugsweise wird die Zwischenposition so berechnet, dass die Beendigung des Einparkvorgangs mit voll eingeschlagener Lenkung möglich ist, da der Fahrer diese Lenkeinstellung ohne weitere Hilfsmittel am leichtesten eindeutig vornehmen kann. Insbesondere bei sehr kleinen Parklücken kann die SPA-Info-Funktion als abschließende Anweisung nach dem Vorfahren mit dem bestimmten Lenkwinkel noch eine Mitteilung für ein geradliniges Zurücksetzen des Kraftfahrzeugs geben, damit eine mittig zwischen dem vorderen und hinteren Rand der Parklücke gelegene Endposition erreicht wird. Eine derartige Korrektur ist jedoch nicht unbedingt erforderlich.

Eine zusätzliche Kontrolle kann das erfindungsgemäße Verfahren dem Fahrer zusätzlich dadurch bieten, dass nach dem Erreichen der Zwischenposition ermittelt wird, ob der bestimmte bzw. maximale Lenkeinschlag in der von der SPA-Info-Funktion mitgeteilten Weise auch tatsächlich eingestellt ist, wobei ein Freigabesignal erzeugt wird, wenn der Lenkeinschlag ausreichend eingestellt ist und/oder wobei ein Stoppsignal erzeugt wird, wenn der Lenkeinschlag nicht ausreichend eingestellt ist. Dadurch erhält der Fahrer rechtzeitig eine zusätzliche Information, ob die grundsätzlich mögliche Beendigung des Parkvorgangs mit einem abschließenden Zug auf dem vorberechneten Fahrtweg mit der vom Fahrer selber vorgenommenen Lenkeinstellung auch tatsächlich eingehalten werden kann, oder ob weitere Korrekturen des Lenkeinschlags erforderlich sind.

Gemäß einer besonders bevorzugten Ausführungsform der Erfindung ist vorgesehen, dass dem Fahrer die Anweisungen zum weiteren Verlauf des Parkvorgangswegs mittels einer akustischen und/oder optischen Ausgabeeinheit gegeben werden. Diese Ausgabeeinheit bildet die Kommunikationsschnittstelle zum Fahrer (HMI), wobei akustische Anweisungen beispielsweise durch verschiedene Töne oder vorzugsweise durch gegebenenfalls auch in verschiedenen Sprachen vorgespeicherte Sprachsegmente erfolgen können.

Besonders vorteilhaft ist es dabei ferner, wenn dem Fahrer die Anweisungen zum weiteren Verlauf des Parkvorgangswegs mittels optischer Anzeigemittel gegeben werden, die insbesondere durch eine in ein Kombiinstrument des Kraftfahrzeugs integrierte Anzeigevorrichtung gebildet sein kann. Dabei können dem Fahrer die Anweisungen in an sich bekannter Weise beispielsweise durch unterschiedliche graphische Symbole oder durch verschiedenfarbige Leuchtelemente signalisiert werden.

Als Weiterbildung der Erfmdung wird ferner vorgeschlagen, dass der Parkvorgang durch die SPA-Lenk-Funktion des Einparkassistenten erst nach einem Betätigungssignal des Fahrers und nur dann begonnen wird, wenn zu den erfassten Werten der Größe und Position der Parklücke ein geeigneter Parkvorgangsweg ermittelbar ist. Dabei kann vorzugsweise ein optisches und/oder akustisches Signal für den Fahrer erzeugt werden, wenn zu den erfassten Werten der Größe und Position der Parklücke kein geeigneter Parkvorgangsweg ermittelbar ist, beispielsweise weil die gerade geprüfte Parklücke tatsächlich zu klein für das Kraftfahrzeug ist.

Die vorliegende Erfindung betrifft auch ein System, das zur Durchführung des erfindungsgemäßen Verfahrens geeignet ist.

Ein dem vorangehend beschriebenen Verfahren entsprechendes System zur Unterstützung eines semiautonomen Parkvorgangs bei einem Kraftfahrzeug umfasst vorzugsweise mindestens eine an einem Kraftfahrzeug angeordnete Messeinrichtung zur Erfassung der Größe einer Parklücke und der Position des Kraftfahrzeugs relativ zu der Parklücke, eine Rechnereinheit oder Rechenmittel zur Ermittlung eines geeigneten, möglichst optimalen Parkvorgangswegs in Abhängigkeit von den erfassten Daten, sowie mit der Rechnereinheit bzw. mit den Rechenmitteln verbundene Stellmittel, durch die die Lenkung des Kraftfahrzeugs entsprechend des ermittelten Parkvorgangswegs automatisch betätigbar ist.

Erfindungsgemäß ist bei dem System durch die Rechnereinheit bzw. durch die Rechenmittel eine auf dem Parkvorgangsweg liegende Zwischenposition des Kraftfahrzeugs ermittelbar, wobei die Stellmittel nur bis zum Erreichen dieser Zwischenposition automatisch betätigt sind, und wobei optische und/oder akustische Ausgabemittel vorgesehen sind, durch die dem Fahrer Anweisungen zu dem sich an die Zwischenposition anschließenden weiteren Verlauf des ermittelten Parkvorgangswegs mitteilbar sind.

Das erfmdungsgemäße System kann den Fahrer eines Kraftfahrzeugs mit einem semiautonom ausgeführten ersten Zug eines Parkvorgangs bei verhältnismäßig geringem Aufwand gerade auch bei kleineren Parklücken wirkungsvoll unterstützen. Das erfindungsgemäße System kann dabei besonders kostengünstig ausgeführt werden.

Besonders vorteilhaft ist es, wenn das System Speichermittel aufweist, in denen eine das erfindungsgemäße Verfahren ausführende Software speicherbar ist. In den Speichermitteln werden vorzugsweise auch die erforderlichen Kenngrößen des Kraftfahrzeugs abgespeichert, insbesondere die Länge, die Breite und der kleinstmögliche Kurvenradius bzw. Wendekreis des Kraftfahrzeugs in beide Richtungen, die für die Ausführung des Verfahrens zur Ermittlung eines geeigneten bzw. des optimalen Parkvorgangs benötigt werden.

### Zeichnungen

In den Zeichnungen sind Ausführungsbeispiele der Erfindung dargestellt, die in der nachfolgenden Beschreibung näher erläutert werden. Es zeigen:
Figur 1: eine schematische Darstellung eines Kraftfahrzeugs vor Beginn des erfindungemäß ausgeführten Einparkvorgangs in eine zwischen zwei hintereinander geparkten Fahrzeugen;
Figur 2: eine schematische Darstellung des Kraftfahrzeugs in der Zwischenposition des erfindungemäß ausgeführten Einparkvorgangs; und
Figur 3: eine schematische Darstellung des Kraftfahrzeugs nach Beendigung des erfindungemäß ausgeführten Einparkvorgangs.

### Beschreibung der Ausführungsbeispiele

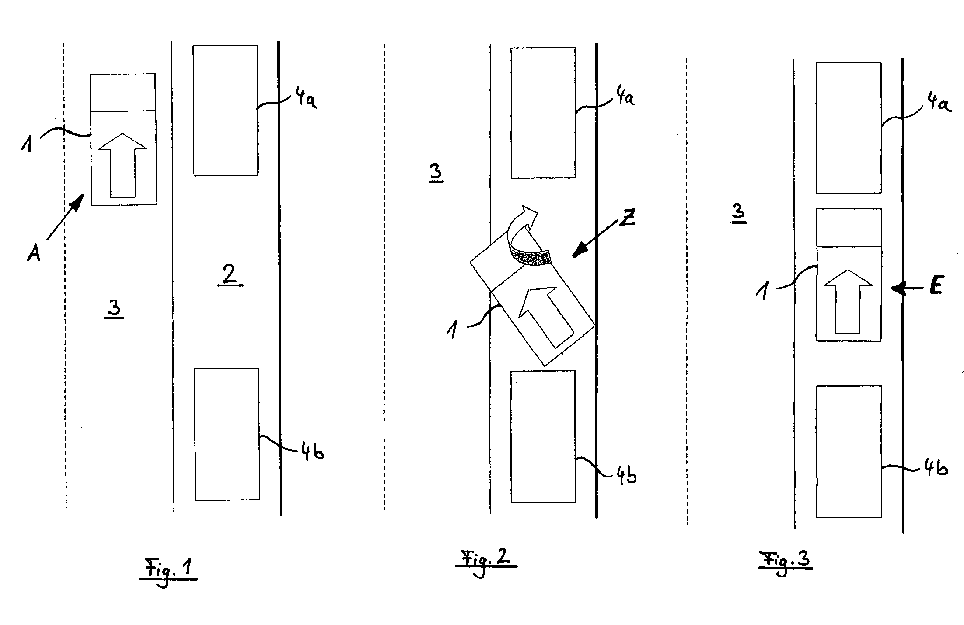

In Figur 1 ist ein Kraftfahrzeug 1 dargestellt, das mit einem System zur Ausführung des erfindungemäßen Verfahrens ausgerüstet ist. Der in den Figuren eingezeichnete Pfeil im Kraftfahrzeug 1 weist nach vorne und stellt somit in allen drei Figuren die Vorwärtsfahrtrichtung des Kraftfahrzeugs 1 dar. Das erfindungsgemäße System dient als semiautonomer Einparkassistent (SPA) dazu, den Fahrer beim Einparken in die Parklücke 2 zu unterstützen, die sich neben der Fahrspur 3 des Kraftfahrzeugs 1 zwischen zwei hintereinander abgestellten Fahrzeugen 4a und 4b befindet. Dazu weist das Kraftfahrzeug 1 nicht näher dargestellte, an sich bekannte Ultraschallsensoren als Erfassungsmittel zur Erfassung des Umfelds auf, mit denen die Größe, insbesondere die Länge der Parklücke 2 sowie ihre Lage relativ zur Position des Kraftfahrzeugs 1 erfasst werden kann.

Die so erfassten Daten zu der vom Fahrer gewünschten Parklücke 2 werden von einer Rechnereinheit unter Berücksichtigung der fahrzeugspezifischen Kenndaten wie der Länge und des Wenderadius des Kraftfahrzeugs 1 daraufhin überprüft, ob ein geeigneter Einparkvorgang ausführbar ist. Sofern dies möglich ist, wird von der Rechnereinheit ein optimaler Einparkweg ermittelt, der mit Unterstützung des Einparkassistenten anschließend in einem semiautonomen Einparkvorgang durchgeführt wird.

Dabei beginnt der Einparkvorgang bei der in Figur 1 dargestellten Anfangsposition A, in der das Kraftfahrzeug 1 sich seitlich neben und nach vorne versetzt vor der Parklücke 2 befindet. Das Kraftfahrzeug 1 ist mit Stellmitteln ausgestattet, mit denen die Lenkung des Kraftfahrzeugs 1 entsprechend des ermittelten Einparkwegs automatisch betätigt werden kann. Der Fahrer braucht dabei lediglich den Rückwärtsgang einzulegen oder bei einem Automatikgetriebe die Rückwärtsfahrstufe zu wählen und Gas zu geben bzw. die Bremse zu lösen, wozu er durch geeignete Ausgabemittel in akustischer und/oder optischer und/oder haptischer Weise aufgefordert wird. Sodann fährt er unter Anwendung der SPA-Lenk-Funktion des Einparkassistenten bis in die in Figur 2 dargestellte Zwischenposition Z in die Parklücke 3 hinein. Die hierfür notwendigen Lenkbewegungen werden von dem System für diesen ersten Zug des Einparkvorgangs automatisch vorgenommen.

In der in Figur 2 dargestellten Zwischenposition, die hier gleichzeitig den Umkehrpunkt zwischen dem Rückwärtszug und dem anschließenden Vorwärtszug des Einparkvorgangs darstellt, endet die SPA-Lenk-Funktion. Ab hier erhält der Fahrer über geeignete Kommunikationsmittel als Mensch-Maschine-Schnittstelle (HMI) nur noch Anweisungen, wie er den ermittelten Einparkvorgang beenden kann. Dabei muss der Fahrer in dem nun folgenden Vorwärtszug neben den Fahr- und Bremsfunktionen auch noch die Lenkfunktionen selber ausführen, wobei er jedoch mit den SPA-Info-Funktionen weiterhin die Unterstützung des Einparkassistenten-Systems erhält. Es liegt also eine definierte Trennung zwischen der SPA-Lenk-Funktion und der SPA-Info-Funktion vor, wobei der Übergang an der defmierten Zwischenposition Z erfolgt.

So erhält der Fahrer bei Erreichen der Zwischenposition Z zunächst eine Anweisung zum Anhalten des Kraftfahrzeugs 1. Anschließend wird dem Fahrer mitgeteilt, dass er das Lenkkrad bis zum Anschlag nach rechts einschlagen und dann nach vorne fahren soll. Auf diese Weise gelangt das Kraftfahrzeug in dem zweiten Zug des Einparkvorgangs in die in Figur 3 dargestellte Endposition E des Einparkvorgangs. Dabei stellt dieser zweite, bereits vor Beginn des Einparkvorgangs berechnete und in Vorwärtsfahrt ausgeführte Zug des Einparkvorgangs quasi eine vordefinierte Korrekturfahrt dar.

Es ist auch möglich, den Fahrer bei dieser Fahrt noch durch weitere Komponenten, beispielsweise durch einen vorderen Parkpiloten bzw. eine vordere Park Distance Controll (PDC) zu unterstützen, um den Fahrer auf drohende Kollisionen hinzuweisen. Derartige Zusatzkomponenten sind jedoch für die Ausführung des erfmdungemäßen Verfahrens nicht unbedingt erforderlich. Falls vom Fahrer gewünscht, kann er das Kraftfahrzeug 1 aus der Position E auch noch geringfügig gerade zurücksetzen, um vorne und hinten den gleichen Abstand zwischen dem Kraftfahrzeug 1 und den beiden benachbarten Fahrzeugen 4a und 4b herzustellen.

Die Kommunikationsmittel zur Mitteilung der Fahr- und Lenkanweisungen an den Fahrer werden hier auf optischem Wege vorteilhafterweise durch in ein Kombiinstrument des Kraftfahrzeugs 1 integrierte Anzeigemittel gebildet. Alternativ oder zusätzlich können die Anweisungen dem Fahrer jedoch auch akustisch, insbesondere durch vorgespeicherte Sprachbausteine bzw. Sprachsegmente gegeben werden.

Bei einer akustischen Anzeige können Pfeildarstellungen für einen Vollausschlag der Lenkung einerseits und im Vorfahren andererseits angezeigt werden. Akustisch kann "Nach rechts einschlagen und vorfahren" ausgegeben werden. Bevorzugt wird das Erreichen einer geeigneten Parkposition insbesondere über an der Vorderseite des Fahrzeugs angeordnete Abstandsmessmittel erfasst, so dass dem Fahrer akustisch und/oder optisch ein Anhaltehinweis ausgegeben wird.

Obwohl die vorliegende Erfindung hier lediglich anhand eines bevorzugten Ausführungsbeispiels beschrieben wurde, ist sie nicht darauf beschränkt, sondern in vielfältiger Weise modifizierbar. Insbesondere ist das erfindungsgemäße Verfahren nicht nur bei Einparkvorgängen, sondern auch beim Ausparken sowie beim Einparken in schräg oder senkrecht zur ursprünglichen Fahrtrichtung des Kraftfahrzeugs liegenden Parklücken einsetzbar.

Auch kann das erfindungsgemäße Verfahren durch weitere aus dem Stand der Technik bekannte automatische Steuerungseingriffe, insbesondere durch einen selbsttätigen Bremseneingriff zur Verhinderung einer drohenden Kollision ergänzt werden. Systeme zur Parklückenvermessung, die beim Finden einer ausreichend großen Parklücke helfen, können vorzugsweise mit Ultraschall-Abstandsmesseinrichtungen arbeiten. Die Abstandsmesseinrichtungen können aber auch auf der Basis anderer physikalischer Prinzipien, beispielsweise mit Radar- oder Infrarotmessung, ausgeführt sein.

## Patentansprüche

1. Verfahren zur Unterstützung eines semiautonomen Parkvorgangs bei einem Kraftfahrzeug (1), wobei die Größe einer Parklücke (2) und die Position des Kraftfahrzeugs (1) relativ zu der Parklücke (2) erfasst werden und in Abhängigkeit von diesen erfassten Daten ein geeigneter Parkvorgangsweg ermittelt und automatisch die Lenkung des Kraftfahrzeugs (1) entsprechend des ermittelten Parkvorgangswegs betätigt wird,
**dadurch gekennzeichnet,**
**dass** die Lenkung des Kraftfahrzeugs (1) nur über einen Teilbereich des Parkvorgangswegs bis zu einer Zwischenposition (Z) des Kraftfahrzeugs (1) automatisch betätigt wird, und dass bei oder nach dem Erreichen der Zwischenposition (Z) dem Fahrer Anweisungen zum weiteren Verlauf des Parkvorgangswegs gegeben werden.

2. Verfahren nach Anspruch 1, **dadurch gekennzeichnet, dass** der Parkvorgang ein Rückwärts-Einparkvorgang ist, wobei die Zwischenposition (Z) am Ende des in Rückwärtsfahrt ausgeführten ersten Zuges des Einparkvorgangs liegt.

3. Verfahren nach Anspruch 2, **dadurch gekennzeichnet, dass** die Zwischenposition (Z) derart versetzt und in einem Winkel schräg zur ermittelten Endposition (E) des Parkvorgangs liegt, dass das Kraftfahrzeug (1) mit einem bestimmten Einschlagwinkel, insbesondere mit Volleinschlag, der Lenkung in die Endposition (E) oder in eine geradlinig vor oder hinter der Endposition (E) liegende Position lenkbar ist.

4. Verfahren nach Anspruch 3, **dadurch gekennzeichnet, dass** nach dem Erreichen der Zwischenposition (Z) ermittelt wird, ob der bestimmte bzw. maximale Lenkeinschlag des Kraftfahrzeugs (1) eingestellt ist, und dass ein Freigabesignal erzeugt wird, wenn der Lenkeinschlag ausreichend eingestellt ist und/oder dass ein Stoppsignal erzeugt wird, wenn der Lenkeinschlag nicht ausreichend eingestellt ist.

5. Verfahren nach einem der vorherigen Ansprüche, **dadurch gekennzeichnet, dass** dem Fahrer die Anweisungen zum weiteren Verlauf des Parkvorgangswegs mittels einer akustischen und/oder optischen Ausgabeeinheit gegeben werden.

6. Verfahren nach Anspruch 5, **dadurch gekennzeichnet, dass** dem Fahrer die Anweisungen zum weiteren Verlauf des Parkvorgangswegs mittels optischer Anzeigemittel, insbesondere mittels einer in ein Kombünstrument des Kraftfahrzeugs (1) integrierten Anzeigevorrichtung gegeben werden.

7. Verfahren nach einem der vorherigen Ansprüche, **dadurch gekennzeichnet, dass** der Parkvorgang nach einem Betätigungssignal des Fahrers nur dann begonnen wird, wenn zu den erfassten Werten der Größe und Position der Parklücke (2) ein geeigneter Parkvorgangsweg ermittelbar ist.

8. Verfahren nach Anspruch 7, **dadurch gekennzeichnet, dass** der Fahrer ein optisches und/oder akustisches Signal erhält, wenn zu den erfassten Werten der Größe und Position der Parklücke (2) kein geeigneter Parkvorgangsweg ermittelbar ist.

9. System zur Unterstützung eines Parkvorgangs bei einem Kraftfahrzeug (1), zur Durchführung des Verfahrens nach einem der Ansprüche 1 bis 8, wobei das System vorzugsweise Speichermittel umfasst in denen ein das erfindungsgemäße Verfahren ausführendes Computerprogramm speicherbar ist.

10. System zur Unterstützung eines semiautonomen Parkvorgangs bei einem Kraftfahrzeug (1), umfassend mindestens eine an einem Kraftfahrzeug (1) angeordnete Messeinrichtung zur Erfassung der Größe einer Parklücke (2) und der Position des Kraftfahrzeugs (1) relativ zu der Parklücke (2), eine Rechnereinheit zur Ermittlung eines geeigneten Parkvorgangswegs in Abhängigkeit von den erfassten Daten, sowie mit der Rechnereinheit verbundene Stellmittel, durch die die Lenkung des Kraftfahrzeugs (1) entsprechend des ermittelten Parkvorgangswegs automatisch betätigbar ist,
**dadurch gekennzeichnet,**
**dass** durch die Rechnereinheit eine auf dem Parkvorgangsweg liegende Zwischenposition (Z) des Kraftfahrzeugs (1) ermittelbar ist, wobei die Stellmittel nur bis zum Erreichen dieser Zwischenposition (Z) automatisch betätigt sind,
und **dass** optische und/oder akustische und/oder haptische Ausgabemittel vorgesehen sind, durch die dem Fahrer Anweisungen zu dem sich an die Zwischenposition (Z) anschließenden weiteren Verlauf des ermittelten Parkvorgangswegs mitteilbar sind.

## Claims

1. Method for assisting a semi-autonomous parking process in a motor vehicle (1), wherein the size of a parking space (2) and the position of the motor vehicle (1) relative to the parking space (2) are sensed and a suitable parking process travel is determined as a function of these acquired data and the steering of the motor vehicle (1) is activated automatically in accordance with the parking process travel which is determined, **characterized in that** the steering of the motor vehicle (1) is activated automatically only over part of the parking process travel up to an intermediate position (Z) of the motor vehicle (1), and **in that** when the intermediate position (Z) is reached or after it is reached instructions for the further course of the parking process travel are issued to the driver.

2. Method according to Claim 1, **characterized in that** the parking process is a reverse parking process, wherein the intermediate position (Z) lies at the end of the first manoeuvre of the parking process carried out in the reverse direction.

3. Method according to Claim 2, **characterized in that** the intermediate position (Z) is offset and located at an oblique angle with respect to the determined end position (E) of the parking process such that the motor vehicle (1) can be steered with a specific steering lock angle, in particular with full lock, of the steering into the end position (E) or into a position lying linearly in front of or behind the end position (E).

4. Method according to Claim 3, **characterized in that** after the intermediate position (Z) has been reached it is determined whether the specified or maximum steering lock of the motor vehicle (1) is set, and **in that** an enable signal is generated if the steering lock is set sufficiently and/or **in that** a stop signal is generated if the steering lock is not set sufficiently.

5. Method according to one of the preceding claims, **characterized in that** the instructions for the further course of the parking process travel are issued to the driver by means of an acoustic and/or optical output unit.

6. Method according to Claim 5, **characterized in that** the instructions for the further course of the parking process travel are issued to the driver by means of optical display means, in particular by means of a display device which is integrated into a combination instrument of the motor vehicle (1).

7. Method according to one of the preceding claims, **characterized in that** the parking process is started after an activation signal of the driver only if a suitable parking process travel can be determined for the acquired values for the size and position of the parking space (2).

8. Method according to Claim 7, **characterized in that** the driver receives an optical and/or acoustic signal if no suitable parking process travel can be determined for the acquired values for the size and position of the parking space (2).

9. System for assisting a parking process in a motor vehicle (1), wherein, in order to carry out the method according to one of Claims 1 to 8, the system preferably comprises storage means in which a computer program which executes the method according to the invention can be stored.

10. System for assisting a semi-autonomous parking process in a motor vehicle (1), comprising at least one measuring device which is arranged on a motor vehicle (1) and has the purpose of sensing the size of a parking space (2) and the position of the motor vehicle (1) relative to the parking space (2), a computer unit for determining a suitable parking process travel as a function of the acquired data, and actuator means which are connected to the computer unit and by means of which the steering of the motor vehicle (1) can be activated automatically in accordance with the parking process travel which is determined, **characterized in that** the computer unit can determine an intermediate position (Z), lying on the parking process travel, of the motor vehicle (1), wherein the actuator means are activated automatically only until this intermediate position (Z) is reached, and **in that** optical and/or acoustic and/or haptic output means are provided which can provide the driver with instructions relating to the further profile, adjoining the intermediate position (Z), of the parking process travel which is determined.

## Revendications

1. Procédé d'assistance d'une manoeuvre de rangement semi-autonome d'un véhicule automobile (1) dans un emplacement de stationnement, selon lequel on saisit la dimension d'un emplacement de stationnement (2) et la position du véhicule automobile (1) par rapport à l'emplacement de stationnement (2) et en fonction des données ainsi saisies on détermine un trajet approprié pour la manoeuvre automatique de rangement et on actionne automatiquement la direction du véhicule automobile (1) selon le trajet de manoeuvre de rangement ainsi déterminé,
**caractérisé en ce qu'**
on actionne la direction du véhicule automobile (1) seulement sur une plage partielle du trajet pour la manoeuvre automatique de rangement jusqu'à une position intermédiaire (Z) du véhicule automobile (1), et lorsqu'on atteint la position intermédiaire (Z) ou après avoir atteint cette position, on donne au conducteur des indications pour poursuivre le trajet de la manoeuvre de rangement.

2. Procédé selon la revendication 1,
**caractérisé en ce que**
la manoeuvre de rangement est une manoeuvre en marche arrière, la position intermédiaire (Z) se situant à la fin du premier trajet de la manoeuvre de rangement effectuée en marche arrière.

3. Procédé selon la revendication 2,
**caractérisé en ce qu'**
la position intermédiaire (Z) est décalée et fait un angle en biais par rapport à la position finale (E) de la manoeuvre de rangement, pour que le véhicule automobile (1) se guide avec un certain angle de braquage, notamment avec un braquage maximum, dans la position finale (E) ou dans une position située en ligne droite devant ou derrière la position finale (E).

4. Procédé selon la revendication 3,
**caractérisé en ce qu'**
après avoir atteint la position intermédiaire (Z) on détermine si le véhicule automobile est réglé pour un certain braquage ou braquage maximum et on génère un signal de libération si le braquage est réglé suffisamment et/ou on génère un signal d'arrêt si le braquage n'est pas suffisant.

5. Procédé selon l'une des revendications précédentes,
**caractérisé en ce qu'**
on donne au conducteur des indications pour la suite du trajet de la manoeuvre de rangement à l'aide d'une unité d'émission acoustique et/ou optique.

6. Procédé selon la revendication 5,
**caractérisé en ce qu'**
on donne au conducteur des indications pour poursuivre le trajet de la manoeuvre de rangement par un moyen d'affichage optique, notamment à l'aide d'un dispositif d'affichage intégré dans l'instrument combiné du véhicule automobile (1).

7. Procédé selon l'une des revendications précédentes,
**caractérisé en ce qu'**
après le signal d'actionnement pour le conducteur on commence la manoeuvre de rangement seulement si un trajet approprié pour une manoeuvre de rangement a été déterminé à partir des valeurs saisies de la grandeur et de la position de l'emplacement de stationnement (2).

8. Procédé selon la revendication 7,
**caractérisé en ce que**
le conducteur reçoit un signal optique et/ou acoustique si aucun trajet de manoeuvre de rangement approprié n'a pu être déterminé à partir des valeurs saisies de la dimension et de la position de l'emplacement de stationnement (2).

9. Système d'assistance à une manoeuvre de rangement d'un véhicule automobile (1), le système étant prévu pour exécuter le procédé selon l'une des revendications 1 à 8, et il comprend de préférence des moyens de mémoire contenant le programme d'ordinateur pour exécuter le procédé selon l'invention.

10. Système d'assistance à une manoeuvre de rangement semi-autonome d'un véhicule automobile (1) comprenant au moins une installation de mesure équipant un véhicule automobile (1) pour saisir la dimension d'un emplacement de stationnement (2) et la position du véhicule (1) par rapport à l'emplacement de stationnement (2), une unité de calcul pour déterminer un trajet de manoeuvre de rangement approprié en fonction des données saisies ainsi que des moyens d'actionnement reliés à l'unité de calcul qui actionne automatiquement la direction du véhicule automobile (1) selon le trajet déterminé pour la manoeuvre de rangement,
**caractérisé en ce que**
l'unité de calcul détermine une position intermédiaire (Z) du véhicule automobile (1) située sur le trajet de la manoeuvre de rangement,
les moyens d'actionnement étant commandés automatiquement seulement jusqu'à atteindre cette position intermédiaire (Z),
et des moyens d'émission optique et/ou acoustique et/ou haptique sont prévus pour donner au conducteur des indications concernant la poursuite du trajet de la manoeuvre de rangement après la position intermédiaire (Z).
